(19) Europäisches Patentamt

European Patent Office

Office européen des brevets

(11) **EP 0 537 657 B1**

(12) **EUROPÄISCHE PATENTSCHRIFT**

(45) Veröffentlichungstag und Bekanntmachung des Hinweises auf die Patenterteilung:
**18.06.1997 Patentblatt 1997/25**

(51) Int. Cl.$^6$: **B29C 55/04**, B29C 55/12

(21) Anmeldenummer: **92117379.5**

(22) Anmeldetag: **12.10.1992**

(54) **Verfahren zur Verbesserung der mechanischen Eigenschaften von Ein- oder Mehrschichtfolien**

Method for improving the mechanical properties of mono or multilayer films

Procédé pour l'amélioration des propriétés mécaniques de feuilles mono ou multicouches

(84) Benannte Vertragsstaaten:
AT BE CH DE DK ES FR GB GR IT LI LU NL PT SE

(30) Priorität: **16.10.1991 DE 4134190**

(43) Veröffentlichungstag der Anmeldung:
**21.04.1993 Patentblatt 1993/16**

(73) Patentinhaber: **Bio-tec Biologische Naturverpackungen GmbH**
**D-46446 Emmerich (DE)**

(72) Erfinder:
• **Tomka, Ivan, Dr.**
**CH-1722 Bourguillon (CH)**
• **Meissner, Joachim**
**CH-5400 Baden (CH)**
• **Menard, Rico**
**CH-8032 Zürich (CH)**

(74) Vertreter: **Troesch Scheidegger Werner AG Patentanwälte,**
**Siewerdtstrasse 95,**
**Postfach**
**8050 Zürich (CH)**

(56) Entgegenhaltungen:
| | |
|---|---|
| EP-A- 0 032 802 | EP-A- 0 407 147 |
| WO-A-90/11321 | WO-A-91/16375 |
| FR-A- 2 640 274 | US-A- 4 839 450 |

• **DATABASE WPI Week 6800, Derwent Publications Ltd., London, GB; AN 68-29658Q & JP-B-44 013 599 (NIPPON SYNTH. CHEM. IND.)**

## Beschreibung

Die vorliegende Erfindung betrifft ein Verfahren zur Verbesserung der Qualität wie insbesondere der mechanischen Eigenschaften von Ein- oder Mehrschichtfolien mit mindestens einer Schicht, wenigstens teilweise aus thermoplastisch verarbeitbarer Stärke bestehend, sowie eine Ein- oder Mehrschichtfolie mit mindestens einer Schicht, wenigstens teilweise thermoplastisch verarbeitbare Stärke umfassend.

Folien, hergestellt aus Stärke oder Polymerblends, beinhaltend u.a. Stärke, sind bekannt. Ausserdem ist aus dem Stand der Technik eine Reihe von Polymerblends bekannt, die u.a. zur Herstellung von Folie vorgeschlagen werden und teilweise aus Stärke bestehen.

Ausgangspunkt für den vermehrten Einsatz von Stärke in an sich reinen Kunststoffanwendungen ist einerseits der Wunsch nach vermehrtem Einsatz von nachwachsenden Rohstoffen, im Gegensatz zu der auf petro-chemischen bzw. fossilen Ausgangsbasis der Kunststoffe, und anderseits die Forderung, dass Kunststoffprodukte, die aus Polymeren hergestellt sind, biologisch abbaubar sein sollen.

So sind aus der EP-A-0 402 826 gefüllte Polymere bzw. Polymerblends bekannt, zu deren Herstellung native Stärke oder deren Derivate mit Ethylen-Copolymerisaten gemischt werden. In der WO 90/14388 wird vorgeschlagen, zur Herstellung eines Polymercomposits native Stärke mit Polyethylen zu mischen und alternativ entweder Ethylenacrylsäure-Copolymere oder Glycerin beizufügen. Diese Polymermischungen zeigen selbst bei der Herstellung von gespritzten Formteilen relativ schlechte mechanische Eigenschaften und sind für die Herstellung von Folien ungeeignet. Es scheint, dass die native Struktur der Stärke in diesen Blends wenigstens teilweise erhalten bleibt, was sich offensichtlich schlecht auf deren Eignung als "Engineering Plastics" auswirkt.

In den EP-A-0 327 505, EP-A-0 404 723, EP-A-0 407 350, EP-A-0404 727 und EP-A-0 404 728 werden eine Reihe von Polymerblends vorgeschlagen welche einerseits auf destrukturierter Stärke basieren und zudem verschiedenste Polymere bzw. Copolymere enthalten. Bei destrukturierter Stärke handelt es sich dabei um eine Stärkemodifikation, welche aus nativer Stärke erhalten wird, welche mit einem Feuchtigkeitsgehalt von ca. 15 - 20%, d.h. mit dem für native Stärke üblichen Wassergehalt, unter Erhitzen und Zuführen von mechanischer Arbeit verarbeitet wird. In Untersuchungen, speziell im Zusammenhang mit der WO 90/05161, wurde gefunden, dass diese destrukturierte Stärke nur limitiert verwendbar ist als "Engineering Plastic", da offensichtlich nach wie vor native Strukturen in dieser Stärkeform vorliegen. Das scheint auch der Grund zu sein, warum die im Stand der Technik vorgeschlagenen Polymerblends, basierend auf destrukturierter Stärke, nicht zu einwandfreien Folien verarbeitet werden können. Derart hergestellte Folien können eine bräunliche Farbe aufweisen und zudem relativ schlechte mechanische Werte ergeben. Auch die Wasserresistenz derartiger Folien ist relativ schlecht.

Weiter schlagen die EP-A-0 400 531 und EP-A-0 400 532 vor, die Stärke mittels eines hochsiedenden Plastifiziermittels und eines Destrukturierungsmittels zu destrukturieren, wobei es sich beispielsweise um Glycerin als Plastifiziermittel und um Harnstoff als Destrukturierungsmittel handeln kann. Zusätzlich zu der so destrukturierten Stärke werden bis zu 15% Ethylenacrylsäure und/oder Polyvinylalkoholcopolymere zugefügt. Durch das Plastifiziermittel wie auch das Destrukturierungsmittel kann wohl der Destrukturierungseffekt bei der nativen Stärke etwas verbessert werden, doch sind Folien, hergestellt gemäss den beiden zitierten EP-A-0 400 531/32 qualitativ nicht ausreichend, um z.B. als Verpackungsfolien mit erhöhten mechanischen Anforderungen verwendet zu werden.

Aus diesem Grund wurde versucht, von der in der WO 90/05161 vorgeschlagenen thermoplastisch verarbeitbaren Stärke auszugehen, die weitgehendst frei von nativen Strukturelementen ist. Auf die Herstellung und Charakterisierung von thermoplastisch verarbeitbarer Stärke soll an dieser Stelle nicht näher eingegangen werden, indem auf die WO 90/05161 verwiesen wird, deren Inhalt hiermit Bestandteil dieser Beschreibung ist.

Deshalb verwendet die WO 91/16375 für die Herstellung eines Polymerblends die erwähnte thermoplastisch verarbeitbare Stärke als Stärkebasis. Gemäss der WO 91/16375 wird die thermoplastisch verarbeitbare Stärke (TPS) zur Herstellung des Blends mit einem Polyolefin, wie beispielsweise Polyethylen oder Polypropylen gemischt, wobei vorzugsweise beim Mischen ein Phasen- oder Haftvermittler in Form eines Blockcopolymeren zugegeben wird, um die mechanische Kopplung zwischen Stärke- und Polyolefinphasen zu begünstigen. Die aus diesen Blends hergestellten Folien zeigen an sich gute mechanische Eigenschaften und gute Wasserbeständigkeit, wobei allerdings nach wie vor weitere Verbesserungen wünschbar und möglich erscheinen.

Es ist deshalb eine Aufgabe der vorliegenden Erfindung, basierend auf der PCT/CH91/00078 die Eigenschaften und die Qualität von Folien zu verbessern, die wenigstens zu einem Teil aus Stärke bestehen.

Erfindungsgemäss wird diese Aufgabe mittels des Verfahrens nach Anspruch 1 gelöst.

Ausgegangen wird, wie bereits erwähnt, von der WO 91/16375, gemäss welcher die Herstellung von Ein- oder Mehrschichtfolien vorgeschlagen wird, wobei mindestens eine der Schichten wenigstens teilweise thermoplastisch verarbeitbare Stärke umfasst. Dabei kann diese Schicht entweder im wesentlichen weitgehendst aus thermoplastisch verarbeitbarer Stärke bestehen oder aber aus einem Polymerblend, umfassend thermoplastisch verarbeitbare Stärke und mind. ein Polyolefin wie beispielsweise Polyethylen oder Polypropylen, sowie vorzugsweise ein Phasen- oder Haftvermittler in Form eines Blockcopolymeren. Gemäss der vorliegenden Erfindung wird nun vorgeschlagen, diese Ein- oder Mehrschichtfolien nach deren Herstellung monoaxial oder biaxial zu recken, wobei der Wassergehalt wenigstens des oder der die thermoplastisch verarbeitbare Stärke enthaltende bzw. enthaltenden Polymers bzw. Polymeren bzw. Polymereschmelzen für die Herstellung der Folie auf einen Wassergehalt von < 1% getrocknet bzw. entgast werden.

Diese an sich bei reinen Kunststofffolien bekannte Technik des Reckens wurde bis anhin bei den im Stand der Technik bekannten Folien aus Stärke nicht angewendet, da offensichtlich Stärke bzw. Polymermischungen mit Stärke hierzu nicht als geeignet erschienen. Es scheint, dass bei den im Stand der Technik verwendeten Polymerblends beim Reckvorgang eine Phasenentmischung zwischen der Stärke und der übrigen Polymerphase stattfindet, weshalb diese Folien kaum brauchbar sind. Möglicherweise führt der relativ hohe Wassergehalt der im Stand der Technik vorgeschlagenen Polymerblends bei den hergestellten Folien dazu, dass ein Recken zu keinen vorteilhaften Resultaten führt.

Bei den gemäss der WO 91/16375 hergestellten Folien, basierend auf thermoplastisch verarbeitbarer Stärke, konnte jedoch durch den Reckvorgang eine wesentliche Verbesserung beispielsweise der mechanischen Festigkeit erreicht werden. Dabei ist es sowohl möglich, die Folien monoaxial oder auch biaxial zu recken.

Beim Recken der gemäss der WO 91/16375 hergestellten Folien ist es offenbar wesentlich, dass ein Comonomeres des Copolymeren bzw. des Phasenvermittlers zwischen der Stärke und dem Polyolefin beim Herstellen des Polymerblends eine kovalente chemische Bindung mit der Stärke eingegangen ist. Diese kovalente chemische Bindung kann beispielsweise mittels Infrarotspektrum nachgewiesen werden, wobei es sich herausgestellt hat, dass beim Fehlen einer deratigen kovalenten chemischen Bindung ein Recken von Folien, hergestellt aus dem erwähnten Polymerblend, praktisch unmöglich ist. Dies dürfte auch der Grund sein, warum, wie oben erwähnt, die im Stand der Technik vorgeschlagenen Polymerblends bzw. daraus hergestellte Folien nicht dazu geeignet sind, gereckt zu werden.

Weiter wird vorgeschlagen, ein Reckverhältnis im Bereich von 1:4 bis 1:10 zu wählen.

Je nach Zusammensetzung und Aufbau der Folie kann es vorteilhaft sein, ein Verhältnis von 1:6 bis 1:8,5 zu wählen, wobei bevorzugt ein Reckverhältnis im Bereich von ca. 1:7 bis 1:7,5 gewählt wird.

An sich ist bereits ein Recken der hergestellten Folien bei Raumtemperatur möglich. Jedoch hat es sich als vorteilhaft erwiesen, die Reckung in einem Temperaturbereich von ca. 90-130°C durchzuführen.

Weiter wird vorgeschlagen, dass das Polymer oder die Polymere vor dem Aufschmelzen oder die Schmelze bei der Herstellung der Folie auf wenigstens nahezu wasserfrei getrocknet wird bzw. werden.

Analog der erfindungsgemäss vorgeschlagenen Verfahren werden Ein- oder Mehrschichtfolien mit mindestens einer Schicht, wenigstens teilweise thermoplastisch verarbeitbare Stärke umfassend, vorgeschlagen, welche durch Anspruch 7 charakterisiert sind. Weitere erfindungsgemässe Ein- oder Mehrschichtfolien werden durch den Wortlaut nach einem der Ansprüche 8 bis 10 charakterisiert.

Die Erfindung wird nun anschliessend unter Bezug auf Beispiele näher erläutert.

1. Beispiel: Herstellung der thermoplastisch verarbeitbaren Stärke:

67 kg nativer Stärke mit einem Wassergehalt von < 0,3% werden mit 33 kg Glyzerin (99%-ig) in einem Zweiwellenkneter mit kämmenden Schrauben mit Knetblöcken oder einem sog. Kokneter (beispielsweise der Fa. Buss) mit Knetblöcken und Stauringen bei 160-190°C aufgeschlossen. Der Mischung wird mechanische Energie in der Grössenordnung von 0,3-0,5 kWh/kg Schmelze zugeführt. Die Schmelze wird anschliessend extrudiert und beispielsweise granuliert.

Die so hergestellte thermoplastisch verarbeitbare Stärke ist eine homogene, amorphe Masse, die bei der Lagerung geringfügig kristallisiert. Charakteristisch bei der Bildung von thermoplastisch verarbeitbarer Stärke sind die folgenden strukturellen Umwandlungen:

- Verlust der nativen Konformation der Stärke bei den glykosidischen O-Bindungen, indem die dihedralen Winkel (Aufweitung der Helixstruktur) am glykosidischen Sauerstoffatom von > -20° auf < -20° abnehmen;
- Verlust der Doppelbrechung der Stärke;
- Verlust der in der Weitwinkelröntgendifraktion oberhalb 2° Streuwinkel an der Stärke detektierbaren Reflexe.

Im weiteren sei, wie bereits oben erwähnt, auf die WO 90/05161 verwiesen. In diesem Zusammenhang ist zu betonen, dass selbstverständlich anstelle von Glycerin auch andere Zuschlagsstoffe für die Umwandlung der nativen Stärke verwendet werden können, wie beispielsweise Ethanol- oder Propanolamin, Sorbitol oder Harnstoff.

Die gemäss beispielsweise hergestellte thermoplastisch verarbeitbare Stärke wird in einem der nachfolgenden Beispiele für die Herstellung einer Mehrschichtfolie verwendet.

2. Beispiel: Herstellung eines Polymerblend:

75 Kg nativer Stärke mit einem Wassergehalt von < 0,3 Gew% bezogen auf einen Trockenanteil der Stärke, 25 kg 99%-iges Glycerin, 50 kg von Highdensity-Polyethylen (HDPE) mit einem Meltflowindex bei 190°C und 5,1 kg von 0,1 in 10 Min., und 50 kg eines Ethylen/Acrylsäureaethylesther/Maleinsäureanhydrid-Copolymeren werden zusammen bei 190°C analog Beispiel 1 in einem Zweiwellenkneter oder einem Cokneter gemischt und anschliessend extrudiert und granuliert. Das oben verwendete Copolymere setzt sich wie folgt zusammen:
Ethylen 90 Mol%
Acrylsäureaethylesther 8 Mol% und
Maleinsäureanhydrid 2 Mol%.

Beim verwendeten Blockcopolymeren als Phasenvermittler handelt es sich nur um ein Beispiel, als an sich sämtliche, üblicherweise beim Compoundieren von zweiphasigen Polymerblends verwendeten Produkte als Phasenvermittler verwendet werden können. Dabei kann es sich beispielsweise um "Lotader" der Fa. CDF-Chemie, um "Novatec" der Fa. Mitsubishi Chemicals, um "Surlyn" der Fa. Dupont oder um "Lonply" der Fa. Mitsui Toatsu handeln. Wesentlich dabei ist, dass die beiden Phasen - thermoplastisch verarbeitbare Stärke und das Polyehtylen - sich eng durchmischen und eine anschliessende Entmischung verhindert wird.

Beim Herstellen des Polymerblends ist es wichtig, dass eines der Comonomeren des Copolymeren bzw. des Phasenvermittlers mit der Stärke eine kovalente chemische Bindung eingeht. Wenn beispielsweise bei der Herstellung des Polymerblends der Wassergehalt zu hoch ist, wird das Copolymere durch Wasseraufnahme inaktiviert und die erwähnte kovalente chemische Bindung mit der Stärke verhindert. Das Fehlen dieser kovalenten chemischen Bindung hat Konsequenzen auf das nachfolgende Herstellen von Folien bzw. auf das Recken dieser Folien.

Anstelle des gewählten Highdensity-Polyethylens kann selbstverständlich ein anderes Polyolefin bzw. beispielsweise Polypropylen gewählt werden.

Ebenfalls die in Beispiel 2 hergestellte Polymermischung wird in den anschliessenden Beispielen für die Herstellung von erfindungsgemäss gereckten Folien verwendet.

<u>3. Beispiel:</u> Einschichtfolie aus einem Polymerblend gemäss Beispiel 2:

Der in Beispiel 2 hergestellte Polymerblend wird auf einen Feuchtigkeitsgehalt von < 1 Gew% getrocknet. Anschliessend werden aus der Polymermischung Folien geblasen mit Schichtdicken in der Grössenordnung von 50-120 μ. Die Verarbeitungsbedingungen sind die folgenden:

| Schneckendurchmesser D | 25 mm | |
|---|---|---|
| Gesamtlänge der Schnecke | 25 D | |
| Zuführzone | 9 D | Temperatur 160°C |
| Kompressionszone | 8 D | Temperatur 165°C |
| Homogenisierungszone | 4 D | Temperatur 170°C |
| Madocmischelement | 4 D | |
| Schraubentiefe in der Zuführzone | 3,5 mm | |
| Schraubentiefe in der Homogenisierungszone | 1,75 mm | |
| Schneckengeschwindigkeit | 80 min$^{-1}$. | |

Die gemessene Massentemperatur beträgt 150°C und der Druck im Stauraum vor der Extrusionsdüse beträgt 470 bar.

Die so hergestellten Folien aus dem Stärkepolymerblend werden anschliessend entweder bei Raumtemperatur oder bei erhöhter Temperatur bis zu 130°C mit einem Reckverhältnis von 1:6 bis 1:7,5 in einer Richtung, d.h. monoaxial, gereckt, wodurch sich Folien mit den folgenden mechanischen Eigenschaften ergeben:
Spannung bei Bruch: 40-200 MPa
Dehnung bei Bruch: 10-270 %
Energieaufwand bis Bruch $\sim$ 4 MJ/mm$^2$.

Die verschiedenen Reckbedingungen und jeweils gemessenen entsprechenden mechanischen Eigenschaften sind in der nachfolgenden Tabelle 1 zusammengefasst. Für deren Verständnis gelten folgende Definitionen:

- $\sigma_B$ =      Spannung bei Bruch, definiert als gemessene Kraft bei Bruch bezogen auf den Ausgangsquerschnitt (technische Spannung)

- $D_B\%$ =

$$\text{relative Dehnung in \% der Ausgangslänge der Probe} = (\frac{L}{L_o} - 1) \cdot 100\%,$$

wobei L = Länge im gedehnten Zustand und $L_o$ = Ausgangslänge

- E = Elastizitätsmodul; berechnet aus der Anfangssteigung der Spannungs-Dehnungskurve bei einfachem Zugversuch
- $W_B$ = Energieaufwand bis zum Bruch
- $\lambda_R$ =

$$\mathrm{Reckverh\ddot{a}ltnis} \ \frac{L}{L_o}$$

- $\dot{\varepsilon}$ =

$$\text{Dehngeschwindigkeit beim Recken} = \text{en} \ \frac{L}{L_o}/s$$

- $V_K$ = Klemmengeschwindigkeit beim Recken
- $T_R$ = Temperatur, bei welcher die Reckung durchgeführt wird.

Die Reckversuche wurden in zwei Moden durchgeführt:

- einfache monoaxiale Dehnung und
- aequi-biaxiale Dehnung.

## Tabelle 1

| | $T_R(°C)$ | $\lambda_R$ | $V_K$(mm/min) | $\dot{\varepsilon}$(sec$^{-1}$) | $\sigma_B$(MPa) | $D_B$(%) | E(MPa) | $W_B$(MJ/m$^2$) |
|---|---|---|---|---|---|---|---|---|
| ungereckte Folie: | - | 1 | | | 25 | 600 | 180 | 10,6 |
| | 20 | 6,2 | 80 | | 161 | 42 | 340 | 3,8 |
| gereckt | 140 | 7,4 | | 0,1 | 19 | 33 | 300 | |
| | 128 | 7,4 | | 0,2 | 200 | 10 | 3'300 | |
| | 128 | 7,4 | | 0,1 | 110 | 25 | 1'500 | |
| | 128 | 7,4 | | 0,01 | 85 | 6 | 2'400 | |
| | 121 | 7,4 | | 0,2 | 160 | 8 | 3'000 | |
| | 121 | 7,4 | | 0,1 | 160 | 11 | 2'500 | |
| | 103 | 4,5 | | 0,1 | 143 | 17 | 1'900 | |
| | 92 | 3,3 | | 0,1 | 38 | 270 | 330 | |
| reines PE gereckt | 128 | 7,4 | | 0,2 | 610 | 12 | 8'160 | 2 |

Wie aus Tabelle 1 klar erkennbar, sind sowohl die Werte für Bruchspannung wie für den Elastizitätsmodul bei den gereckten Folien wesentlich besser als bei der vergleichsweise ungereckten Folie.

Ebenfalls interessant ist der Vergleich mit reinen Polyethylenfolien, wobei sich daraus ergibt, dass der Zuschlag der Stärke zum Polymerblend die mechanischen Werte wohl negativ beeinflusst. Die mechanischen Eigenschaften von Folien, hergestellt aus dem Polymerblend gemäss Beispiel 2 nach dem Recken im Verhältnis von ca. 1:7 sind nach wie vor gut.

Mittels einer gemäss dem 3. Beispiel hergestellten Einschichtfolie aus einem Polymerblend gemäss Beispiel 2 wurde im weiteren die Wichtigkeit des Vorhandenseins einer kovalenten chemischen Bindung zwischen einem Comonomeren des Copolymeren mit der Stärke untersucht bzw. nachgewiesen. An sich wurde analog den oben erwähnten Herstellbedingungen eine Einschichtfolie hergestellt, wobei jedoch von einem Polymerblend ausgegangen wurde, bei dessen Herstellung der Wassergehalt mehr als 3% betrug. Im Infrarotspektrum konnte nachgewiesen werden, dass praktisch keine kovalente chemische Bindungen zwischen dem Copolymeren und der thermoplastisch verarbeitbaren Stärke vorhanden sind, offenbar infolge Desaktivierung des Copolymeren durch Aufnahme von Wasser. Die so analog hergestellte Einschichtfolie wurde ebenfalls gereckt, wobei bereits bei einer Reckung von $\lambda = 1,5$ die Folie Löcher aufwies, d.h. sie war bereits unbrauchbar. Im Vergleich dazu sei auf die Reckbedingungen in Tabelle 1 verwiesen, wo die Reckung in den meisten Fällen bis zu $\lambda = 7,4$ betrug.

Dies ist übrigens auch die Erklärung dafür, weshalb die im Stand der Technik vorgeschlagenen Polymerblends bzw. daraus hergestellten Folien nicht gereckt werden können.

Beispiel 4: Mehrschichtfolie:

Beschrieben wird eine Dreischichtfolie mit den Schichttypen ABA, wobei die beiden äusseren Deckschichten aus dem im 2. Beispiel beschriebenen Polymerblend hergestellt sind mit einer Schichtdicke von je 10 $\mu$, währenddem die mittlere Schicht B aus thermoplastisch verarbeitbarer Stärke gemäss Beispiel 1 hergestellt ist mit einer Schichtdicke von 120 $\mu$.

Die Herstellung einer derartigen Dreischichtfolie erfolgt an sich mittels bekannter Coextrusionstechnik, wobei die Dreischichtfolie entweder geblasen oder flach laminiert werden kann. Die Extrusionsbedingungen sind im wesentlichen analog denjenigen, angegeben in Beispiel 3, d.h. in den Extrudern werden Temperaturen im Bereich von ca. 160-170°C gewählt.

Da sowohl in Schicht A wie auch in Schicht B thermoplastisch verarbeitbare Stärke vorhanden ist, ist die Haftung zwischen den Schichten ausgezeichnet und ein zusätzlicher Haftvermittler bzw. eine Zwischenschicht ist nicht notwendig.

Die beschriebene Dreischichtfolie wurde ebenfalls im Verhältnis von 1:7 bei einer Temperatur von 128°C und einer Dehngeschwindigkeit von 0,2 gereckt, wobei an der gereckten Folie folgende mechanische Eigenschaften gemessen wurden:

$\sigma_B$:   35 MPa
$D_B$:   10%
E :   700 MPa und
$W_B$:   3 MJ/mm$^2$.

Obwohl die beschriebene Dreischichtfolie weitgehendst aus thermoplastisch verarbeitbarer Stärke besteht - der Anteil an Polyethylen und Copolymerem beträgt insgesamt weniger als 10% - sind die mechanischen Eigenschaften in bezug auf Spannung bei Bruch und Elastizitätsmodul wesentlich besser als vergleichsweise bei der unter Beispiel 3 aufgeführten ungereckten Folie, ausschliesslich hergestellt aus dem Polymerblend.

Bei den in Beispiel 3 und Beispiel 4 beschriebenen Folien handelt es sich selbstverständlich nur um zwei Ausführungsbeispiele, um die Erfindung näher zu erläutern. Selbstverständlich können diese Beispiele in beliebiger Art und Weise abgeändert resp. modifiziert oder ergänzt werden, indem anstelle von Polyethylen Polypropylen oder ein anderes Polyolefin oder polyolefinähnliches Polymer verwendet wird, ein anderer Phasenvermittler anstelle des gewählten Blockcopolymeren verwendet wird, oder auch der Anteil an thermoplastisch verarbeitbarer Stärke erhöht oder verringert wird. Erfindungswesentlich ist die Tatsache, dass eine Ein- oder Mehrschichtfolie mindestens eine Schicht umfasst, bestehend im wesentlichen oder wenigstens teilweise aus thermoplastisch verarbeitbarer Stärke, die nach deren Herstellung mono- oder biaxial gereckt wird.

**Patentansprüche**

1.   Verfahren zur Verbesserung der Qualität, wie insbesondere der mechanischen Eigenschaften von Ein- oder Mehrschichtfolien mit mindestens einer Schicht, bestehend aus thermoplastisch verarbeitbarer Stärke oder einem Polymerblend, bestehend wenigstens teilweise aus thermoplastisch verarbeitbarer Stärke, dadurch gekennzeichnet, dass der Wassergehalt mindestens der thermoplastisch verarbeitbaren Stärke oder des Polymerblendes, enthaltend wenigstens teilweise thermoplastische Stärke, bzw. deren Polymerschmelzen für die Herstellung der Folien, einen Wassergehalt von < 1 Gew.% aufweist bzw. aufweisen und die Folien nach deren Herstellung mono- oder biaxial gereckt werden.

2. Verfahren nach Anspruch 1, dadurch gekennzeichnet, dass die Folien in einem Verhältnis von 1:4 bis 1:10 gereckt werden.

3. Verfahren nach einem der Ansprüche 1 oder 2, dadurch gekennzeichnet, dass die Folien in einem Verhältnis von 1:6 bis 1:8,5, vorzugsweise ca. 1:7 gereckt werden.

4. Verfahren nach einem der Ansprüche 1 bis 3, dadurch gekennzeichnet, dass das Recken der Folien in einem Temperaturbereich von Raumtemperatur bis ca. 130°C, vorzugsweise von 90-130°C, erfolgt.

5. Ein- oder Mehrschichtfolie mit mindestens einer Schicht enthaltend thermoplastisch verarbeitbare Stärke oder ein Polymerblend wenigstens teilweise enthaltend thermoplastisch verarbeitbare Stärke, hergestellt nach einem der Ansprüche 1-4, dadurch gekennzeichnet, dass die Folie mono- oder biaxial gereckt ist.

6. Ein- oder Mehrschichtfolien nach Anspruch 5, dadurch gekennzeichnet, dass sie mindestens aus einer Schicht aus einem Polymerblend bestehen, umfassend themoplastisch verarbeitbare Stärke, mindestens ein Polyolefin und einem Blockcopolymer als Phasenvermittler.

7. Ein- oder Mehrschichtfolie nach einem der Ansprüche 5 oder 6, dadurch gekennzeichnet, dass die Folien drei Schichten umfassen, wobei die mittlere Schicht im wesentlichen aus thermoplastisch verarbeitbarer Stärke besteht, sowie die beiden Deckschichten je entweder aus einem Polymerblend bestehen, enthaltend thermoplastisch verarbeitbare Stärke, ein Polyolefin und einen Phasenvermittler, oder aber je im wesentlichen aus mindestens einem Polyolefin.

8. Ein- oder Mehrschichtfolien nach einem der Ansprüche 6 oder 7, dadurch gekennzeichnet, dass der Polymerblend aus 30-70 Gew% thermoplastisch verarbeitbarer Stärke, bis zu 30 Gew% Blockcopolymerem als Phasenvermittler und der Rest Polyolefin besteht, wie vorzugsweise Polyethylen oder Polypropylen.

**Claims**

1. Method for improving the quality, such as the mechanical properties in particular, of single- or multi-layer films with at least one layer consisting of thermoplastically processible starch or a polymer blend consisting at least partly of thermoplastically processible starch, characterised in that the water content at least of the thermoplastically processible starch or the polymer blend comprising at least partly thermoplastic starch or the polymer melts thereof for producing the films is < 1 % by weight and the films are uniaxially or biaxially stretched following their production.

2. Method according to claim 1, characterised in that the films are stretched in a ratio of 1:4 to 1:10.

3. Method according to one of claims 1 and 2, characterised in that the films are stretched in a ratio of 1:6 to 1:8.5, preferably approximately 1:7.

4. Method according to one of claims 1 to 3, characterised in that the films are stretched in an ambient temperature range of up to approximately 130°C, preferably of 90 - 130°C.

5. Single- or multi-layer film with at least one layer comprising thermoplastically processible starch or a polymer blend at least partly comprising thermoplastically processible starch, produced according to one of claims 1 - 4, characterised in that the film is uniaxially or biaxially stretched.

6. Single- or multi-layer films according to claim 5, characterised in that they consist at least of one layer of a polymer blend comprising thermoplastically processible starch, at least one polyolefin and a block copolymer as a phase mediator.

7. Single- or multi-layer film according to one of claims 5 and 6, characterised in that the films comprise three layers, the middle layer consisting essentially of thermoplastically processible starch and the two covering layers each consisting either of a polymer blend comprising thermoplastically processible starch, a polyolefin and a phase mediator or essentially of at least one polyolefin.

8. Single- or multi-layer films according to one of claims 6 and 7, characterised in that the polymer blend consists of 30 - 70 % by weight of thermoplastically processible starch, up to 30 % by weight of block copolymer as a phase mediator and the remainder polyolefin, such as preferably polyethylene or polypropylene.

**Revendications**

1. Procédé pour améliorer la qualité, notamment les propriétés mécaniques, de feuilles monocouches ou multicouches comprenant au moins une couche composée d'amidon apte à subir une transformation thermoplastique ou d'un mélange de polymères composé au moins partiellement d'amidon apte à subir une transformation thermoplastique, caractérisé en ce que la teneur en eau au moins de l'amidon apte à subir une transformation thermoplastique, ou du mélange de polymères contenant au moins partiellement de l'amidon thermoplastique, ou de masses fondues de polymères constitués par ceux-ci, pour la fabrication de feuilles, est < 1 % en poids et les feuilles, après leur fabrication, sont soumises à un étirage uniaxe ou biaxe.

2. Procédé selon la revendication 1, caractérisé en ce que les feuilles sont étirées suivant un rapport de 1:4 à 1:10.

3. Procédé selon la revendication 1 ou 2, caractérisé en ce que les feuilles sont étirées suivant un rapport de 1:6 à 1:8,5, de préférence d'environ 1:7.

4. Procédé selon l'une des revendications 1 à 3, caractérisé en ce que l'étirage des feuilles a lieu dans une plage de température allant de la température ambiante à environ 130°C, de préférence de 90 à 130°C.

5. Feuille monocouche ou multicouche formée d'au moins une couche contenant de l'amidon apte à subir une transformation thermoplastique ou un mélange de polymères contenant au moins partiellement de l'amidon apte à subir une transformation thermoplastique, fabriquée selon l'une des revendications 1 à 4, caractérisée en ce que la feuille est soumise à un étirage uniaxe ou biaxe.

6. Feuilles monocouches ou multicouches selon la revendication 5, caractérisées en ce qu'elles se composent d'au moins une couche d'un mélange de polymères contenant de l'amidon apte à subir une transformation thermoplastique, au moins une polyoléfine et un copolymère séquencé comme intermédiaire de phases.

7. Feuilles monocouches ou multicouches selon la revendication 5 ou 6, caractérisées en ce que les feuilles comprennent trois couches, la couche du milieu se composant essentiellement d'amidon apte à subir une transformation thermoplastique tandis que les deux couches de recouvrement se composent soit d'un mélange de polymères contenant de l'amidon apte à subir une transformation thermoplastique, une polyoléfine et un intermédiaire de phases, soit essentiellement d'au moins une polyoléfine.

8. Feuilles monocouches ou multicouches selon la revendication 6 ou 7, caractérisées en ce que le mélange de polymères comprend de 30 à 70 % en poids d'amidon apte à subir une transformation thermoplastique, jusqu'à 30 % en poids de copolymères séquencés, comme intermédiaire de phases, et, pour le reste, une polyoléfine, de préférence du polyéthylène ou du polypropylène.